# EUROPEAN PATENT APPLICATION

(11) **EP 2 693 587 A1**
(43) Date of publication of application: **05.02.2014**
(21) Application number: 12005657.7
(22) Date of filing: 03.08.2012
(51) Int. Cl.: H02H 9/00, H02H 7/05

(54) **Reliable device for protection of voltage transformers**

(71) Applicant: ABB Technology AG, 8050 Zürich (CH)
(72) Inventor: Pavlas, Marek, 68354 Otnice (CZ); Javora, Radek, 624 00 Brno (CZ); Honzak, Ales, 664 04 Mokra-Horakov (CZ)
(74) Representative: Schmidt, Karl Michael

(57) **Abstract**

The invention relates to a reliable device for protection of voltage transformers from ferroresonant oscillation influences, with input terminals, power supply module, control unit, switching element and burden resistor.

In order to enhance the operation of such protection device, each of the power supply module (2, 12), control unit (3, 13), switching element (4, 14) and burden resistor (5, 15) are arranged at least twice in parallel, in order to fulfill redundancy in each of its functions, and that the control unit operates the switching device, which is connected in series with the burden resistor connected in open-delta circuit of three single-phase voltage transformers.

## Description

The invention relates to a reliable device for protection of voltage transformers from ferroresonant oscillation influences, with input terminals, power supply module, control unit, switching element and burden resistor, according to the preamble of claim 1.

In open-delta circuits ferroresonant oscillations in electric circuits containing voltage transformers are a problem. These oscillations will be damped by the use of damping resistors connected to open-delta circuits or by connection of secondary circuits of three single-phase voltage transformers (VT).

Damping resistors has to be designed not only to damp ferroresonant oscillation but also bear increased voltage (power losses) during network ground fault condition. Because these two parameters go against each other, the resulting value of damping resistor is a compromise. It means, that in some cases the damping resistor does not need to be efficient enough to damp ferroresonant oscillation. This may also create additional losses in the system and cause overheating of resistor or full installation. That is why it is usually placed out of the switchgear which can decrease switchgear IP class.

It is also quite bulky solution and requires additional wiring and connection/fixation out of the low-voltage compartment of the switchgear. Biggest disadvantage of such damping resistor is its impossibility to delay its operation, thus disabling some protection functions that would require no-damping state for propper evaluation of the output signal by protection equipment. This damping resistor also operates all the time regardless of the voltage that appears on open-delta connection of three VTs, which increases switchgear self-consumption.

Such a state of the art is shown in W02006126904 A1, but the system is operated without redundancy, without condition monitoring and without self-checking features.

It is the object of the invention, to enhance the operation of such protection device.

This is realized by the invention, in such, that each of the power supply module, control unit, switching element and burden resistor are arranged at least twice in parallel, in order to fulfill redundancy in each of its functions, and that the control unit operates the switching device, which is connected in series with the burden resistor connected in open-delta circuit of three single-phase voltage transformers.

In an advantageous embodiment a faultry in one component causes that the fault component function will be replaced by the doubled component which are connecting the doubled control units directly in parallel.

By doing that, there is given not only a simple parallel arrangement of doubled devices. There are three components in each parallel branch. In the first branch of the device is arranged a power supply module, a control unit, a switching element and a burden restistor.

In the second branch are also arranged a power suplly module, a control unit, a switching element and a burden resistor.

In a further advantageous embodiment is said, that in the device are logically integrally implemented or separately implemented self-diagnosis means, and that indication means for displaying fault functions are corresponding with the device in that way, that faults can be externally seen.

A further advantageous embodiment is, that the compare parameters and/or the diagnosis algorithm are implemented physically into the control unit.

A further advantageous embodiment is, that the device is connected to open-delta circuit of three single-phase voltage transformers.

In a final advantageous embodiment is said, that the control unit is applied with means to make settings of time-dalay and/or threshold voltage.

In sum, the proposed protection device is capable of protecting voltage transfomers from influences of ferroresonant oscillations, that may appear in electric power network during operation.

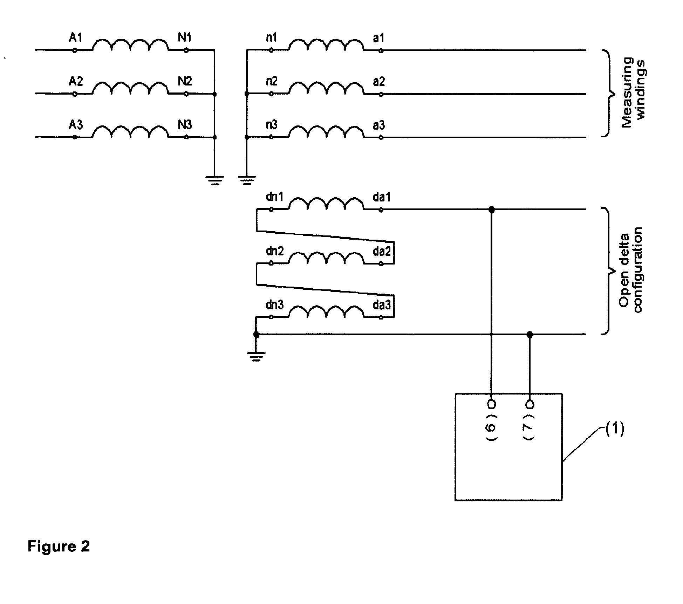

Figure 2 shows the state of the art, in which protection devices are installed in open-delta terminals da1 and dn3 of three single-phase voltage transformers, or one three-phase voltage transformer.

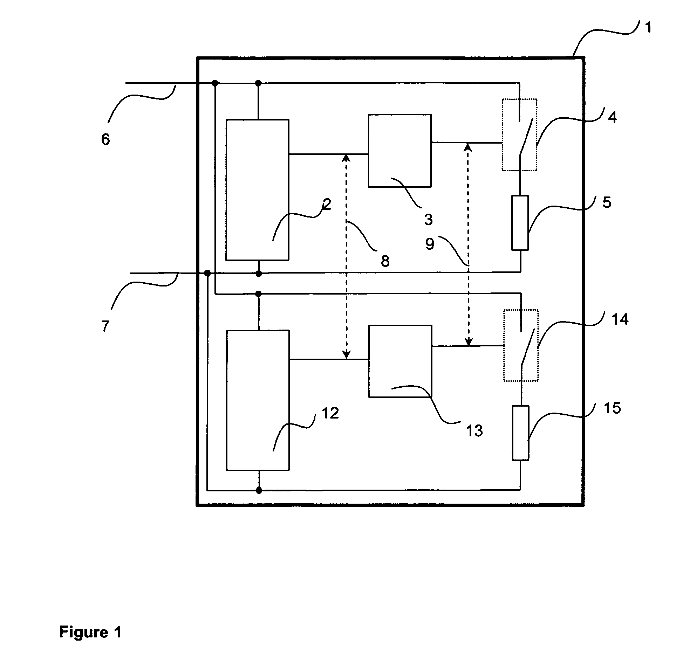

Figure 1 shows an embodiment of the invention, in wihich the devices are connected to input terminals 6 and 7, and furthermore contain power supply modules 2 and 12, control units 3 and 13, switching elements 4 and 14 and burden resistors 5 and 15 are applied twice. So in order to achieve very reliable protection system, all important parts of the said device are doubled and in consequence redundant.

It is important for the understanding of the invention, that each of the aforesaid components or parts are doubled. So redundancy includes all necessary detail- or subfunctions, to result in a redundancy for each component and therefore for the complete functionaly of the device.

In case of the failure of one component, the doubled component replaces the faultry one through the signal wires connections 8 and/or 9, is checked by such a way, that the functionalty of the complete device is not disturbed, like already described above.

Redundandcy of the internal parts improve reliability of protection device which will then work in all cases, even one part fail, thus protect network and/or VT from harmfull effects of ferroresonant oscillations.

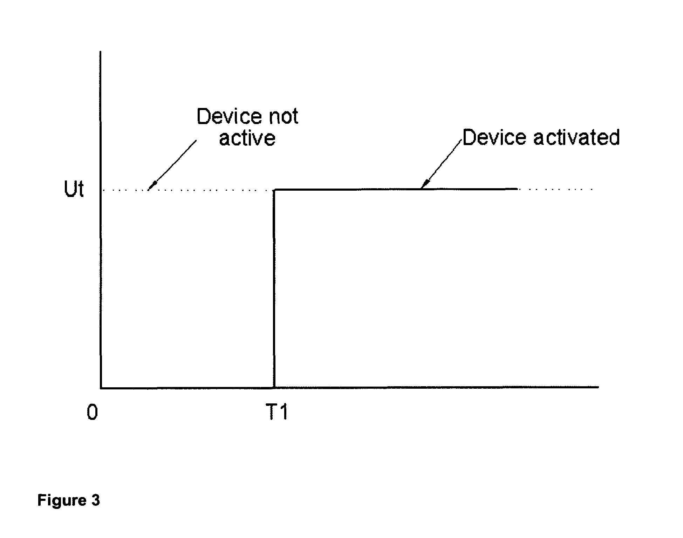

This protection device internally enable delay time 0 to T1, like shown in Figure 3 of its operation in order to allow protection devices connected to the measuring and/or protection windings of voltage transformers to operate, based on set operating time used by protection functions. It means the delay time should be longer then operating time needed for propper operation and/or evaluation of protection functions. Such delay could be done either manually by using e.g. jumpers, being basically a part of control circuit 3 or 13, or electronically being set by controll software. It can be also possible to set treshold voltage Ut, that is a voltage value from which the protection device starts to be active.

In case the device is activated, the burden resistors load the open-delta circuit of the VTs and thus damp the ferroresonant oscillations.

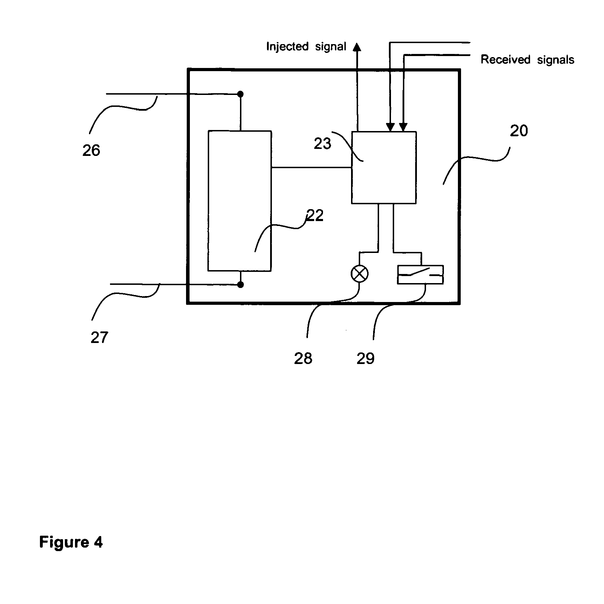

Furthermore, said protection device include self-diagnostic functionality. Figure 4 which enables internal check of own functional circuits and parts. In the same time it enables to indicate the faulty condition externally, either by visual 28 information on the device itself or by electrical signal 29 which can be sent to or read by external device.

Said protection device features following advantages:
- Damping resistance is lower then in case of conventional damping resistor, thus enables more efficient elimination of ferroresonant oscillations
- It can be of very small size compared to conventional damping resistor and it can have also standardized shape capable to be fit on conventional DIN rail
- One protection device protects all 3 voltage transformers connected/creating an open delta circuit
- Very high reliability due to reduntant and self-diagnostic circuits
- Advanced setting possibilities of time delay and treshold voltage
- Indication of faulty condition by visual means or using supperior system
- Zero self consuption during natural network asymetry

Self diagnostic circuits 20 in Fig. 4 consists of input terminals 26 and 27, power supply modules 22, control units 23, visual information 28 and electrical signal 29. Control unit inject control signal to the input terminals 6, 7 of the protection device 1. The injected signal can be checked after each protection device 1 module mentioned in Fig. 1 or at least after modules 4, 14.

## Claims

1. Reliable device for protection of voltage transformers from ferroresonant oscillation influences, with input terminals, power supply module, control unit, switching element and burden resistor,
**characterized in**
**that** each of the power supply module (2, 12), control unit (3, 13), switching element (4, 14) and burden resistor (5, 15) are arranged at least twice in parallel, in order to fulfill redundancy in each of its functions, and that the control unit operates the switching device, which is connected in series with the burden resistor connected in open-delta circuit of three single-phase voltage transformers.

2. Reliable device according to claim 1,
**characterized in**
**that** a faultry in one component causes that the fault component function will be replaced by the doubled component which are connecting the doubled control units (3, 13) directly in parallel.

3. Reliable device according to claim 1,
**characterized in**
**that** in the device are logically integrally implemented or separately implemented self-diagnosis means, and that indication means for displaying fault functions are corresponding with the device in that way, that faults can be externally seen.

4. Reliable device according to claim 1, 2 or 3,
**characterized in**
**that** the compare parameters and/or the diagnosis algorithm are implemented physically into the control unit.

5. Reliable device according to one of the aforesaid claims,
**characterized in**
**that** the device is connected to open-delta circuit of three single-phase voltage transformers.

6. Reliable device according to one of the aforesaid claims,
**characterized in**
**that** the control unit is applied with means to make settings of time-dalay and/or threshold voltage.
